# FASCICULE DE BREVET EUROPEEN

(11) **EP 0 533 532 B1**
(45) Date de publication et mention de la délivrance du brevet: **01.06.1994**
(21) Numéro de dépôt: 92402466.4
(22) Date de dépôt: 09.09.1992
(51) Int. Cl.: H02K 29/00, H02K 11/00, H02K 5/173

(54) **Structure pour moteur à courant continu à commutation électronique**
Aufbau eines elektronisch kommutierten Gleichstrommotors
Structure for an electronic commutated D.C. motor

(30) Priorité: 16.09.1991 FR 9111392
(43) Date de publication de la demande: 24.03.1993
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR); Alberti, Angelo, F-25400 Audincourt (FR)
(74) Mandataire: Mestre, Jean (FR)

(56) Documents cités:
- DE-A- 2 804 149
- DE-U- 8 020 369
- FR-A- 2 651 933
- PATENT ABSTRACTS OF JAPAN vol. 11, no. 338 (E-553)(2785) 5 Novembre 1987
- PATENT ABSTRACTS OF JAPAN vol. 12, no. 452 (E-687)(3299) 28 Novembre 1988
- PATENT ABSTRACTS OF JAPAN vol. 11, no. 254 (E-533)(2701) 18 Août 1987

## Description

La présente invention concerne les moteurs électriques à courant continu à commutation électronique et vise plus particulièrement la structure de ces derniers.

Les moteurs à courant continu à commutation électronique se composent, entre autres, d'un carter qui contient un induit bobiné et d'où sort un arbre. Les moyens de commutation de cet induit, au lieu d'être constitués classiquement par un dispositif électromécanique fait d'un collecteur et de balais, sont, dans ce cas, un dispositif électronique avec un module de commande relié à l'induit fixe du stator.

Ce type de moteur pose habituellement un délicat problème de fabrication, de construction et d'assemblage.

En effet, il faut procéder à la confection des bobinages qui doivent être logés dans des évidements de l'induit, puis il faut assurer la jonction des bouts des fils des bobinages de cet induit avec le circuit électronique du module de commande, et enfin il faut pouvoir dissiper la chaleur des composants de puissance du circuit électronique du module de commande.

Une première source de difficulté est la confection des bobinages de l'induit lorsqu'on désire procéder automatiquement et directement sur l'induit.

Pour assurer la jonction des bouts des fils des bobinages avec le circuit électronique du module de commande, on procède habituellement par soudage des bouts des fils à cosses qui sont associées directement ou non au circuit électronique. La plupart du temps, compte-tenu de la configuration de la structure du moteur, un tel soudage ne peut être fait que manuellement. Ceci est d'autant plus délicat que chaque bobinage nécessite, en principe, deux soudures et que les fils à connecter électriquement sont souvent en "l'air", dans le "vide", autrement dit sans support matériel physique. Une telle opération, qu'il est particulièrement difficile d'automatiser, est une autre source de difficulté car elle nécessite une très grande agilité et demande du temps; et de telles soudures sont sujettes à des défauts de contact.

Une autre source de difficulté est liée à l'existence du dispositif électronique qui comprend, très souvent, des composants de puissance qu'il faut refroidir afin d'éviter leur échauffement qui serait destructeur. Ceci conduit souvent à scinder le circuit électronique de manière que certains de ses composants ne soient plus sur le substrat du circuit imprimé lui-même mais montés directement sur le carter pour dissiper les calories et améliorer la ventilation. On imagine facilement que ceci complique aussi les opérations de montage et d'assemblage et est aussi source de malfaçons.

Les documents FR 89 11 771, FR 90 03 826 et FR 90 11 702 offrent des solutions pour résoudre ce type de difficultés.

Une autre source de difficulté est encore liée à la conception de la structure mécanique de ce type de moteur qui est généralement telle, qu'il n'est pas possible de procéder automatiquement à son assemblage et à son montage par des opérations simples et à cinématiques non complexes, faciles à exécuter à l'aide de robots ou d'automates programmables, car les constituants sont nombreux et de configurations compliquées.

Le but de l'invention est de permettre une automatisation pratiquement totale de la confection ainsi que de l'assemblage et du montage d'un tel moteur du fait que ceux-ci peuvent se faire à l'aide de cinématiques particulièrement simples qui n'exigent que des translations parallèles à l'axe de rotation du moteur.

Outre cette simplification et cette commodité, la conception de cette structure permet d'utiliser des moyens électriques d'alimentation et de commande portés par un circuit imprimé dont le substrat est dépourvu d'évidement central, ce qui augmente la surface utilisable pour l'implantation de composants et de pistes de liaison.

En outre, grâce à la structure selon l'invention, une seule opération permet d'assurer la liaison électrique bobinages de l'induit-moyens d'alimentation et de commande.

L'invention a pour objet une structure pour moteur électrique à courant continu à commutation électronique constitué, entre autres, d'un rotor à inducteur avec un arbre et au moins un palier, d'un stator à induit bobiné portant ce palier et de moyens électriques d'alimentation et de commande de l'induit bobiné. Cette structure, qui comprend un moyeu support avec des branches équipées d'éléments de fixation pour assujettir le stator et avec un fourreau creux destiné à recevoir intérieurement et coaxialement ce palier et qui est muni en bout d'organes de retenue, un mandrin avec un tube destiné à recevoir extérieurement cet induit bobiné et à être monté sur le fourreau et avec une couronne radiale centripète pourvue d'encoches destinées à coopérer avec ces organes de retenue, est caractérisée en ce que, à la jonction branches-fourreau ce moyeu support est muni d'au moins un redan, et en ce que ce tube est muni d'au moins une découpe complémentaire de ce redan servant de butée axiale.

D'autres caractéristiques de l'invention ressortiront de la lecture de la description et des revendications qui suivent, ainsi que de l'examen du dessin annexé, donné seulement à titre d'exemple, où :
- la Figure 1 est une coupe méridienne partielle schématique d'un mode de réalisation d'un moteur à structure selon l'invention;
- la Figure 2A est une vue de côté du mode de réalisation de la Figure 1.
- la Figure 2B est une coupe locale de la Figure 2A selon la ligne B-B;
- la Figure 3 est une vue en perspective de détail schématique d'un moyeu support de la structure de la Figure 1;
- la Figure 4 est une vue en perspective de détail schématique d'un mandrin de la structure de la Figure 1;
- la Figure 5 est une vue analogue à celle de la Figure 1 d'un autre mode de réalisation;
- la Figure 6 est une vue similaire à celle de la Figure 2A du mode de réalisation de la Figure 5;
- les Figures 7A à 7C sont des vues en élévation et en coupe d'un mode de réalisation d'un couvercle pour une structure de l'invention.

Les moteurs électriques à courant continu à commutation électronique étant bien connus dans la technique, on ne décrira dans ce qui suit que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation et sa variante d'exécution.

Pour la commodité de l'exposé, on décrira successivement chacun des constituants d'un mode de réalisation d'une structure perfectionnée selon l'invention avant d'en exposer la technique de montage et d'assemblage.

Un moteur électrique à courant continu à commutation électronique comprend un rotor R et un stator S. Le rotor comprend une culasse C avec un inducteur par exemple des aimants permanents AP ainsi qu'un flasque F destiné à porter un arbre A supporté par au moins un palier P. A cette carcasse est associée par exemple une hélice ou analogue, comme illustré, d'un ventilateur.

Le stator comprend un induit bobiné IB fait d'un empilage de tôles T sur lesquelles sont placés des bobinages B logés dans des évidements, comme il est classique.

La mise en rotation d'un tel moteur est assurée par des moyens d'alimentation et de commande constitués, le plus souvent, d'un circuit imprimé CI fait d'un substrat isolant qui porte des conducteurs électriques et sur lequel sont implantés des composants y compris les composants de puissance.

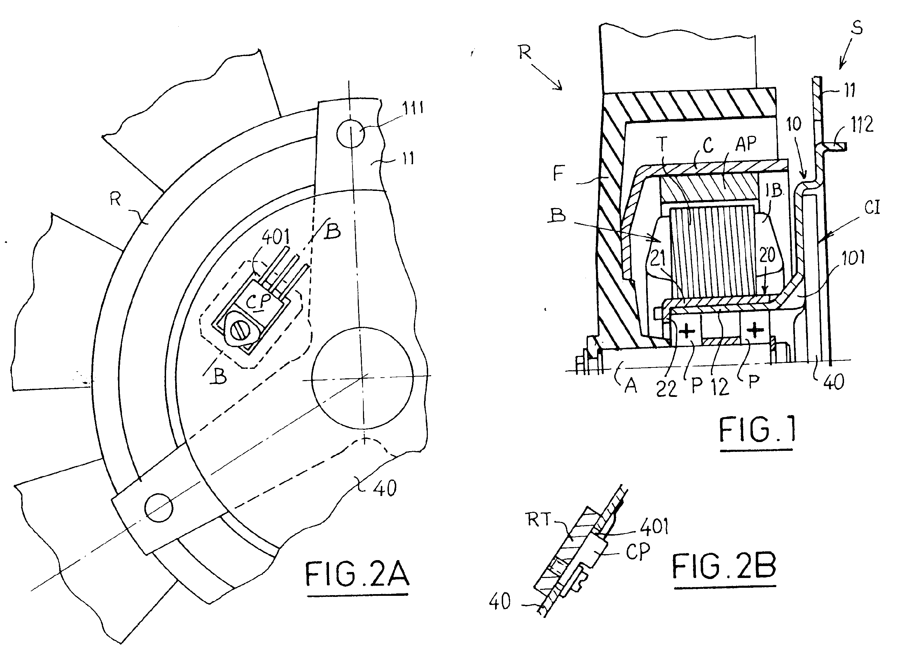

Tout ceci apparaît en particulier de l'examen des Figures 1, 2A, 2B et 5, 6.

Pour construire un tel moteur, on utilise une structure perfectionnée selon l'invention. Cette structure perfectionnée comprend notamment un moyeu support 10 et un mandrin 20.

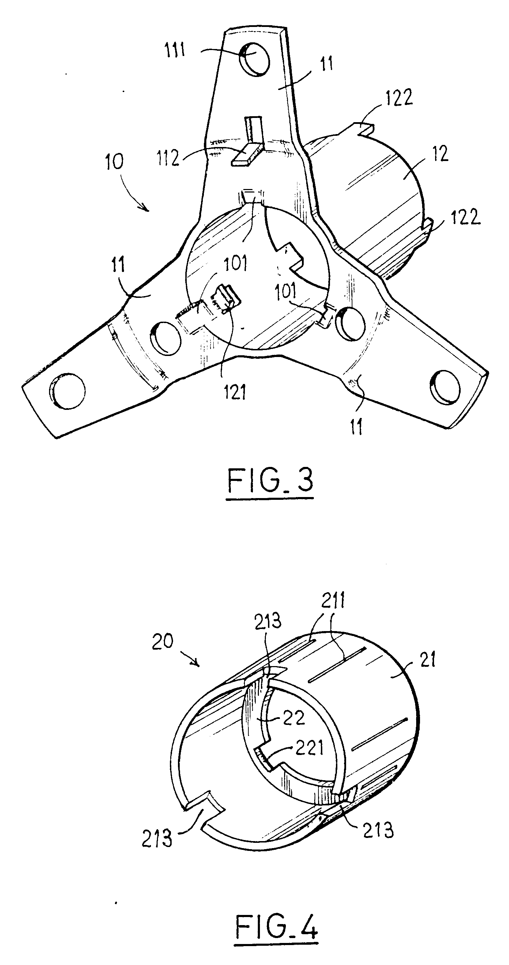

Le moyeu support 10 est constitué de plusieurs branches 11 rayonnantes, par exemple équidistantes, réunies à un fourreau 12. Chacune des branches 11 porte, au voisinage de son extrémité libre un élément de fixation 111, par exemple un trou comme dessiné ou une vis, un rivet ou analogue destiné à assujettir le moteur et en particulier son stator à un bâti d'un appareil, par exemple d'un système de refroidissement ou de climatisation d'une automobile lorsque la culasse du rotor porte l'hélice d'un ventilateur comme illustré par exemple sur les Figures 1 et 2. Le fourreau 12, creux, est destiné à recevoir intérieurement et coaxialement le palier P. Le fourreau 12 porte encore, en bout, des organes de retenue 122 (voir figure 3) telles des pattes dont le rôle apparaîtra par la suite. A la jonction branches-fourreau, le moyeu support 10 est muni d'au moins un redan 101 ou analogue. Ce redan, obtenu par exemple par emboutissage, sert notamment de renfort ou de rigidification pour maintenir les branches pratiquement perpendiculaires à l'axe de rotation du moteur. Ces redans ont aussi un rôle similaire à celui d'une butée axiale pour les raisons que l'on comprendra par la suite.

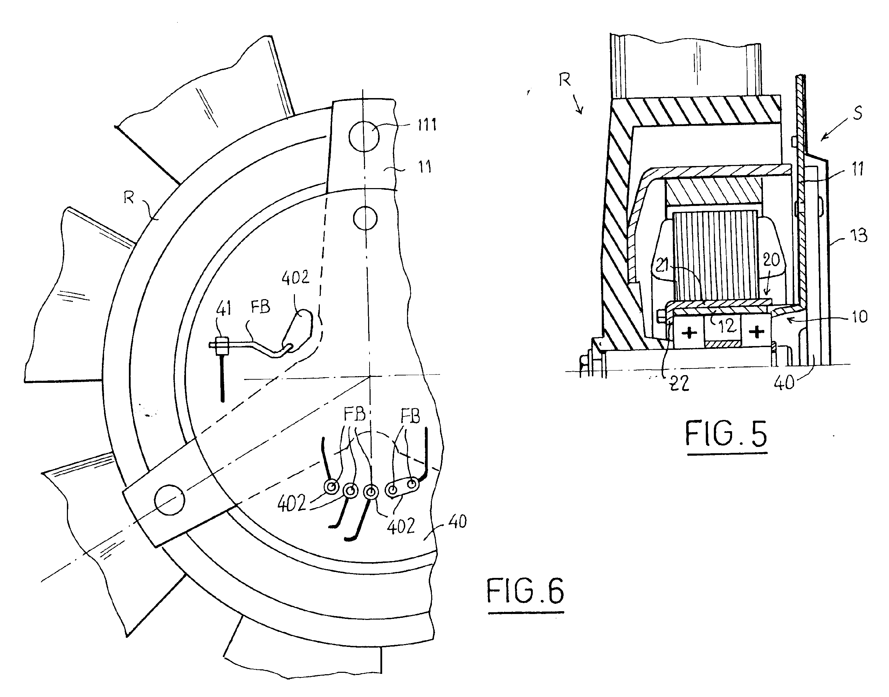

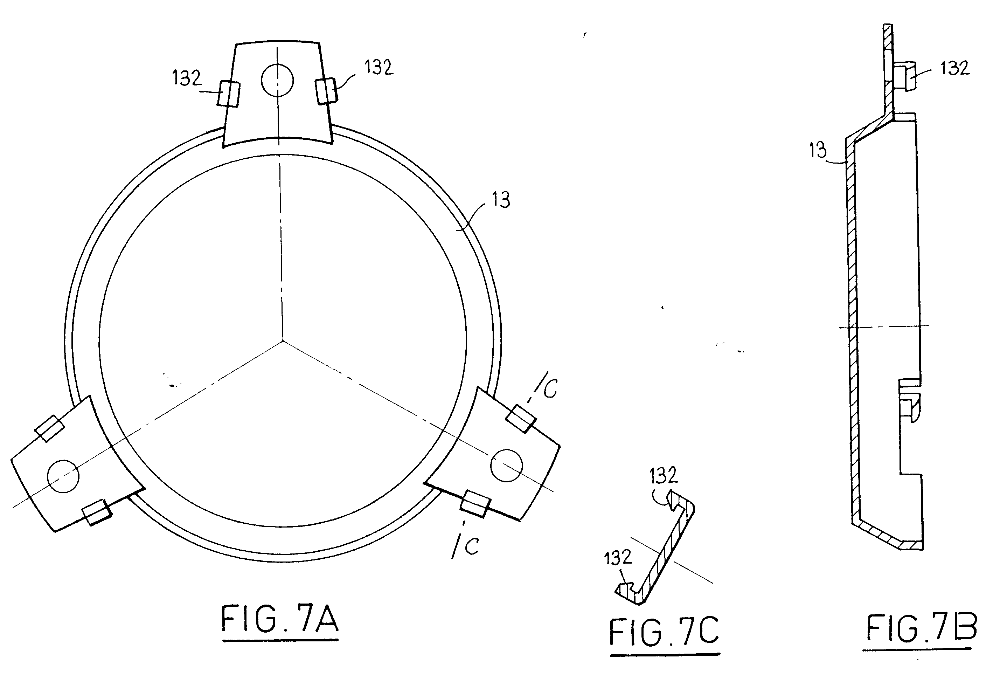

De préférence, le moyeu support 10 est destiné à recevoir un couvercle 13 (voir figures 5 et 7A-7C). Ce couvercle 13, plan ou en cuvette, est s'il y a lieu muni d'organes de retenue 132 pour sa fixation aux branches. Ces organes de retenue 132 sont par exemple des crochets élastiques ou analogues, au besoin venus de moulage soi ce couvercle est fait en matière plastique moulée, qui s'encliquettent sur les branches.

Le mandrin 20 se compose d'un tube 21 portant à l'une de ses extrémités une couronne 22 radiale centripète. Comme on l'observe sur la Figure 1 par exemple, le tube 21 est destiné à recevoir extérieurement l'induit bobiné IB et à être monté sur le fourreau 12. Extérieurement le tube 21 est muni de crantage, moletage 211 ou analogues, de manière à immobiliser en rotation le paquet de tôles T qu'il reçoit. La couronne 22 est pourvue d'encoches 221 destinées à recevoir les pattes 122 ou analogues du fourreau 12. Ceci apparaît par exemple à l'examen de la Figure 1. Ce tube 21 est muni d'au moins une découpe ou similaire, voire aussi d'un redan 213, complémentaire du redan 101 auquel elle (il) s'adapte étroitement. On comprend de la sorte que lorsqu'ils sont montés l'un sur l'autre le moyeu support 10 et le mandrin 20 ont une position relative axiale bien définie puisque redan 101 et découpe 213 coopèrent étroitement et butent l'un contre l'autre; cette coopération contribue aussi à maintenir la position relative en rotation.

Comme on peut l'observer sur les Figures 2 et 6 par exemple, le substrat 40 du circuit imprimé CI est transpercé de passages 401 ainsi que d'orifices 402 et porte des plots 41 à proximité de ceux-ci. Ces passages 401 sont destiné à recevoir des composants de puissance CP et leurs radiateurs RT. Ces orifices 402 sont destinés à recevoir les fils FB.

On observera qu'une implantation judicieuse des composants sur le circuit imprimé permet de les placer en regard des zones libres et dégagées entre les branches du moyeu support sur l'une et/ou l'autre des deux faces du substrat. Ceci autorise donc d'associer ces composants à des radiateurs indépendants, maintenus par exemple par des vis, rivets ou analogues comme dessinés, et de ce fait isolés électriquement vis-à-vis de l'architecture du moteur. Ceci est particulièrement recherché et appréciable si l'on se souvient qu'il est courant que les polarités propres particulières à un composant de puissance et à l'architecture métallique du moteur reliée à la caisse ou coque d'un véhicule, sont de signes opposés et qu'il n'est donc plus nécessaire d'interposer entre la semelle du composant de puissance et son support un isolant électrique spécifique toujours nuisible à une bonne conduction thermique. Pour permettre la liaison électrique entre l'induit bobiné et le circuit imprimé qui est situé en bout, pratiquement à l'extérieur du moteur, par un soudage, sertissage ou similaire des fils sur les plots associés aux pistes du circuit intégré CI, les orifices permettant la traversée du substrat sont de préférence équidistants et situés entre les branches. Ces orifices sont soit relativement vastes pour permettre une traversée collective de fils regroupés soit relativement étroits pour permettre une traversée individuelle de chaque fil indépendant. Lorsqu'on utilise des orifices 402 vastes pour une traversée collective de fils regroupés, les fils regroupés traversent ensemble ces orifices puis sont rabattus séparément, un à un, en vue de la liaison électrique particulière à un plot 41 spécifique déterminé. Lorsqu'on utilise des orifices 402 étroits, par exemple transperçant chaque plot 41 au voisinage de son centre, pour une traversée individuelle de chaque fil indépendant, chaque fil est engagé dans l'orifice particulier qui lui est destiné en vue de sa liaison électrique spécifique par exemple par soudage "en bout".

L'examen de la Figure 1 par exemple montre immédiatement que les différents constituants de la structure selon l'invention peuvent être engagés les uns dans les autres, simplement par des translations axiales, et qu'une fois l'assemblage fait, il suffit de rabattre ou d'écraser les ergots 112 et les pattes 122 ou analogues, pour maintenir le tout assemblé mécaniquement, liaison électrique faite. Cette liaison est facilitée par le fait que les fils engagés dans les orifices sont soutenus par le substrat et non plus dans "le vide, en l'air". Pour le montage du mandrin sur le fourreau du moyeu support, on adopte par exemple un ajustement glissant normalisé H9-f8.

On observera que le couvercle assure la protection des parties intérieures du moteur contre les poussières et les projections de liquide, et lui confère aussi son aspect final.

De la lecture qui précède, on saisit immédiatement tous les avantages apportés par la structure perfectionnée selon l'invention. On notera spécialement qu'on peut réduire l'encombrement axial du moteur en particulier grâce au coulissement qui autorise le bobinage de l'induit et au raccordement électrique qui peut être fait sans que les bouts des fils restent "en l'air, dans le vide" en attendant la jonction.

## Revendications

1. Structure pour moteur électrique à courant continu à commutation électronique constitué, entre autres, d'un rotor à inducteur avec un arbre et au moins un palier, d'un stator à induit bobiné portant ce palier et de moyens électriques d'alimentation et de commande de l'induit bobiné, et ladite structure comprenant un moyeu support (10) avec des branches (11) équipées d'éléments de fixation (111) pour assujettir le stator et avec un fourreau (12) creux destiné à recevoir intérieurement et coaxialement ce palier et qui est muni en bout d'organes de retenue (122), un mandrin (20) avec un tube (21) destiné à recevoir extérieurement cet induit bobiné et à être monté sur le fourreau (12) et avec une couronne (22) radiale centripète pourvue d'encoches (221) destinées à coopérer avec ces organes de retenue (122), structure caractérisée en ce que à la jonction branches (11)-fourreau (12) ce moyeu support (10) est muni d'au moins un redan (101) et en ce que ce tube (21) est muni d'au moins une découpe (213) ou similaire complémentaire de ce redan (101) servant de butée axiale.

2. Structure selon la revendication 1 où les moyens d'alimentation et de commande sont portés par un circuit imprimé dont le substrat (40) porte des plots (41), caractérisée en ce que le substrat (40) est transpercé de passages (401) situés à l'écart des branches (11) et destinés à recevoir des composants de puissance associés éventuellement à des radiateurs thermiques.

3. Structure selon l'une des revendications 1 ou 2 où les moyens d'alimentation et de commande sont portés par un circuit imprimé dont le substrat (40) porte des plots (41), caractérisé en ce que ce substrat (40) est transpercé d'orifices (402) équidistants situés à l'écart des branches (11) et destinés à la traversée des fils pour leur jonction électrique avec les plots (41).

## Patentansprüche

1. Aufbau für einen Gleichstrommotor mit elektronischer Stromwendung, der unter anderem durch einen Induktionsrotor mit einer Welle und wenigstens einem Lager, einen bewickelten Ankerstator, der dieses Lager trägt, und elektrische Mittel zur Speisung und Steuerung des bewickelten Ankers gebildet ist, wobei der Aufbau eine Trägernabe (10) mit Schenkeln (11), welche mit Befestigungselementen (111) zum Befestigen des Stators versehen sind, und einer Büchse (12), welche zur koaxialen Aufnahme dieses Lagers im Inneren bestimmt und am Ende mit Halteelementen (122) versehen ist, einen Wickelträger (20) mit einem Rohr (21), das dazu bestimmt ist, außen diesen bewickelten Anker aufzunehmen und auf der Büchse (12) angebracht zu werden, und mit einem zur Mitte hin weisenden radialen Kranz (22), welcher mit Aussparungen (221) für ein Zusammenwirken mit diesen Halteelementen (122) versehen ist, aufweist, wobei der Aufbau dadurch gekennzeichnet ist, daß am Übergang Schenkel (11) - Büchse (12) diese Trägernabe (10) mit wenigstens einem Absatz (101) versehen ist, und daß dieses Rohr (21) mit wenigstens einem zu diesem Absatz (101) komplementären Ausschnitt (213) oder dergleichen, der als axialer Anschlag dient, versehen ist.

2. Aufbau nach Anspruch 1, wobei die Speise- und Steuermittel von einer gedruckten Schaltung getragen werden, deren Substrat (40) Steckstellen (41) trägt, dadurch gekennzeichnet, daß dieses Substrat (40) von Durchgängen (401) durchsetzt ist, die im Abstand von den Schenkeln (11) liegen und zur Aufnahme von Leistungskomponenten bestimmt sind, die ggfs. Wärmestrahlern zugeordnet sind.

3. Aufbau nach einem der Ansprüche 1 oder 2, wobei die Speise- und Steuermittel von einer gedruckten Schaltung getragen werden, deren Substrat (40) Steckstellen (41) trägt, dadurch gekennzeichnet, daß dieses Substrat (40) von äquidistanten Öffnungen (402) durchsetzt ist, die im Abstand von den Schenkeln (11) liegen und dazu bestimmt sind, von Drähten für deren elektrische Verbindung mit den Steckstellen (41) durchsetzt zu werden.

## Claims

1. Structure for an electronically commutated DC electric motor consisting, inter alia, of a rotor with a field winding with a shaft and at least one bearing, of a stator with a wound armature carrying this bearing and electrical means for supplying and controlling the wound armature, and the said structure comprising a support hub (10) with branches (11) equipped with attachment elements (111) for fastening the stator, and with a hollow sleeve (12) intended to receive internally and coaxially this bearing and which is provided at the end with retaining members (122), a mandrel (20) with a tube (21) intended to receive externally this wound armature and to be mounted on the sleeve (12), and with a centripetal radial ring (22) provided with slots (221) intended to interact with these retaining members (122); which structure is characterized in that, at the branches (11)/ sleeve (12) junction, this support hub (10) is provided with at least one step (101) and in that this tube (21) is provided with at least one cut-out (213) or the like, complementary to this step (101) serving as an axial stop.

2. Structure according to Claim 1, in which the supply and control means are carried by a printed circuit, the substrate (40) of which carries terminals (41);characterized in that this substrate (40) is transpierced with passages (401) located away from the branches (11) and intended to receive power components possibly associated with heat dissipators.

3. Structure according to one of Claims 1 and 2, in which the supply and control means are carried by a printed circuit, the substrate (40) of which carries terminals (41); characterized in that this substrate (40) is transpierced with equidistant orifices (402) located away from the branches (11) and intended for the through-passage of the leads for their electrical connection to the terminals (41).
